# EUROPEAN PATENT SPECIFICATION

(11) **EP 4 386 504 B1**
(45) Date of publication and mention of the grant of the patent: **11.11.2026**
(21) Application number: 23207085.4
(22) Date of filing: 15.09.2020
(51) Int. Cl.: G05D 1/242

(54) **USING ADJUSTABLE VISION COMPONENT FOR ON-DEMAND VISION DATA CAPTURE OF AREAS ALONG A PREDICTED TRAJECTORY OF A ROBOT**
VERWENDUNG EINER EINSTELLBAREN SICHTKOMPONENTE ZUR SICHTDATENERFASSUNG VON BEREICHEN ENTLANG EINER VORHERGESAGTEN BAHN EINES ROBOTERS AUF ANFRAGE
UTILISATION D'UN COMPOSANT DE VISION RÉGLABLE POUR LA CAPTURE DE DONNÉES DE VISION À LA DEMANDE DE ZONES LE LONG D'UNE TRAJECTOIRE PRÉDITE D'UN ROBOT

(30) Priority: 16.09.2019 US 201962901201 P; 24.09.2019 US 201916580714
(43) Date of publication of application: 19.06.2024
(62) Document number(s) of the earlier application(s) in accordance with Art. 76 EPC: 20781671.1 / 4 010 772
(73) Proprietor: GDM Holding LLC, Mountain View CA 94043 (US)
(72) Inventor: Husain, Ammar, Mountain View, 94043 (US); Persson, Mikael, Mountain View, 94043 (US)
(74) Representative: Auger, Hannah Maria

(56) References cited:
- US-A1- 2017 357 270

## Description

### Background

Robots may construct and/or maintain a representation of an environment, and utilize the representation in performing various operation(s) in the environment. For example, the representation can model various objects and/or object attribute(s) (e.g., classification(s), pose(s)) and can be used in path planning, real-time trajectory generation, object interaction planning and/or execution, and/or for other robotic operation(s). As one example, a three-dimensional ("3D") model of at least portions of an environment can be generated in furtherance of completing navigation tasks within the environment. For instance, a robot can acquire data from a 3D vision component (e.g., a 3D laser scanner, a stereographic camera, etc.) viewing a portion of an environment of the robot, and map such data to the 3D model. The 3D models can be formed as so-called "voxel-based" 3D models ("3D voxel models"), in which a 3D matrix of voxels are allocated. For example, data points generated by one or more 3D vision components (also referred to as a "3D point cloud") can be projected onto spatially-corresponding voxels of the 3D voxel model.

As one example, some robots and/or robot control systems utilize 3D models for various robotics applications, such as path planning. For example, one or more path planning algorithms can utilize a "current" 3D model in generating a path of the robot from a "current position" of the robot to a "target position" of the robot. For instance, the path planning algorithm(s) can be utilized to generate a collision-free path while considering occupied voxels, of a 3D voxel model, as obstacles to be avoided-and while considering unoccupied voxels, of the 3D voxel model, as points through which the collision-free path may pass.

In generating and/or traversing a path, there may be environmental object(s) and/or environmental object attribute(s) that are unknown and/or that are not determined with a sufficient degree of confidence. For example, when a 3D voxel model is utilized, some voxels present in the 3D voxel model can be unknown at a given time as a result of blind spots of vision component(s) of the robot and/or a lack of observance of areas corresponding to those unknown voxels. As another example, a classification of an environmental object represented by a current 3D model may not be known and/or may not be determined with sufficient confidence and/or a current state (*e.g*., pose, velocity, and/or acceleration) of the environmental object may not be known and/or may not be determined with sufficient confidence. This can be a result of, for example, the environmental object not being recently observed in vision sensor data of a vision component, a result of limitations of the vision component (*e.g.*, the environmental object being near the boundary of a detection range of the vision component), and/or a result of limitations of perception system(s) that process the vision sensor data. As a result, when the robot is approaching certain areas, the robot may reduce its velocity and/or otherwise operate less optimally to account for unknown and/or less confident environmental conditions. Additionally or alternatively, environmental object(s) and/or environmental object attribute(s) that are unknown and/or that are not determined with a sufficient degree of confidence may result in an increased chance of collision of the robot with environmental object(s).

US2017/357270 A1 discloses a system including a vehicle and a sensor connected to the vehicle. The system may receive a predetermined path for the vehicle to follow. The system may also receive a plurality of objectives, associated with a corresponding set of sensor data, for which to collect sensor data. The system may determine, for each of the plurality of objectives, a portion of the environment for the sensor to scan to acquire the corresponding set of sensor data. The system may determine, based on the portion of the environment determined for each of the plurality of objectives, a sensor trajectory through which to move the sensor. The system may cause the sensor to move through the determined sensor trajectory and scan portions of the environment corresponding to the determined sensor trajectory as the vehicle moves along the predetermined path.

### Summary

The claims define the matter for protection. Implementations set forth herein relate to systems, methods, and apparatuses that use multiple vision components of a robot to mitigate occurrences of environmental object(s) and/or environmental object attribute(s) being unknown and/or to increase accuracy in determinations related to environmental object(s) and/or environmental object attribute(s). The multiple vision components can include a fixed vision component that has a fixed pose relative to a robot frame of the robot, and an adjustable vision component that is dynamically adjustable to a plurality of poses relative to the robot frame. Implementations dynamically adjust the adjustable vision component in a manner that seeks to mitigate occurrences of environmental object(s) and/or environmental object attribute(s) being unknown and/or to increase accuracy in determinations related to environmental object(s) and/or environmental object attribute(s).

The pose to which the adjustable vision component is adjusted at a given instance in time can be based on one or more factors. The factor(s) can include, for example, a planned path of the robot, known blind spot(s) of the fixed vision component, location(s) of dynamic environmental object(s), distance of the pose from a current pose of the adjustable vision component, and/or other factors.

For example, the adjustable vision component can be adjusted to a particular pose based on determining that, at the particular pose, a field of view of the adjustable vision component will be directed to a yet to be traversed waypoint of a planned path. Optionally, in such an example, adjusting to the particular pose can further be based on a distance from a current pose to the particular pose. For instance, adjusting to the particular pose can be a function of time until the waypoint will be encountered and distance needed to adjust the adjustable vision component to the particular pose. In these and other manners, vision data from the adjustable vision component can be utilized, optionally in combination with vision data from the fixed vision component, to determine presence and/or attribute(s) of environmental object(s) that may be near the waypoint and/or to determine presence and/or attribute(s) with increased accuracy.

As another example, the adjustable vision component can be adjusted to a particular pose based on determining that at the particular pose a field of view, of the adjustable vision component, will be directed to a known blind spot of the fixed vision component. Optionally, in such an example adjusting to the particular pose can be further based on anticipated movement of the robot (or a robot component) toward the blind spot and/or based on a duration since the blind spot was last captured in vision sensor data. In these and other manners, vision data from the adjustable vision component can be utilized to determine presence and/or attribute(s) of environmental object(s) that may be in the blind spot and/or to determine presence and/or attribute(s) with increased accuracy.

As yet another example, the adjustable vision component can be adjusted to a particular pose based on determining that at the particular pose a field of view, of the adjustable vision component, will be directed to a dynamic object in the environment. Optionally, in such an example adjusting to the particular pose can be further based on distance of the dynamic object relative to the robot and/or a planned path of the robot. In these and other manners, vision data from the adjustable vision component can be utilized to determine attribute(s) of dynamic environmental object(s) and/or to determine attribute(s) with increased accuracy.

In some implementations, the robot can include at least one adjustable robot arm and/or other adjustable appendage(s). In some of those implementations, it can be determined whether adjusting the adjustable vision component to a particular pose will result in the adjustable appendage(s), at their current pose(s), blocking at least some of the field of view of the adjustable vision component when it is at the particular pose. In those implementations, if it is determined that the field of view of the adjustable vision component will be blocked by the appendage(s), the appendage(s) can be adjusted to new pose(s) that mitigate (or fully eliminate) the blocking of the field of view. The adjusting of the appendage(s) to the new pose(s) can occur before, during, or after adjustment of the adjustable vision component to the particular pose.

Optionally, a mapping between adjustable vision component poses and adjustable appendage poses can be utilized to determine which pose pairs will lead to blockage and/or which will not lead to blockage. The mapping and/or other techniques can be utilized to adjust an appendage, when its current pose would block the field of view, to a new pose that will mitigate (or eliminate) the blocking. In various implementation(s) the new pose can be selected, from a plurality of candidate poses that would all mitigate (or eliminate) the blocking, based on proximity (*e.g.,* in joint space) of the new pose to the current pose. In these and other manners, a new pose can be chosen that will mitigate (or eliminate) the blocking, while mitigating power and/or other resources required to adjust the appendage.

As one particular example, the fixed vision component can be a LIDAR component that is positioned near a base of a robot, and the adjustable vision component can be a stereo camera (active or passive) that is positioned near a head of the robot. Because many robots often include a chassis for supporting one or more motors and other mechanical features for allowing the robots to drive, a vision component near a base of the robot can experience blind spots. For example, when the base of the robot includes a rotating LIDAR component at the front of the base of the robot, a portion of the robot between the head and the base can create a blind spot relative to the rotating LIDAR component. Although incorporating a greater total number of cameras and/or sensors can be an option, this option may not be cost-effective and can necessitate the consumption of more computational resources, such as processing bandwidth, portable energy storage, and/or network bandwidth.

The above description is provided as an overview of some implementations of the present disclosure. Further description of those implementations, and other implementations, are described in more detail below.

Other implementations may include a non-transitory computer readable storage medium storing instructions executable by one or more processors (*e.g*., central processing unit(s) (CPU(s)), graphics processing unit(s) (GPU(s)), and/or tensor processing unit(s) (TPU(s)) to perform a method such as one or more of the methods described above and/or elsewhere herein. Yet other implementations may include a system of one or more computers that include one or more processors operable to execute stored instructions to perform a method such as one or more of the methods described above and/or elsewhere herein. Yet other implementations may include a robot that include one or more processors operable to execute stored instructions to perform a method such as one or more of the methods described above and/or elsewhere herein.

It should be appreciated that all combinations of the foregoing concepts and additional concepts described in greater detail herein are contemplated as being part of the subject matter disclosed herein. For example, all combinations of claimed subject matter appearing at the end of this disclosure are contemplated as being part of the subject matter disclosed herein.

### Brief Description of the Drawings

FIG. 1 illustrates a view of a robot that is navigating in an environment using a first vision component that can be used to compensate for uncertainty that can be exhibited by the robot when relying on a second vision component.
FIG. 2A, FIG. 2B, FIC. 2C, and FIG. 2D illustrate views of a robot that employs multiple vision components in order to reduce uncertainty with respect to occupancy of an environment and/or blind spots experienced by the robot.
FIG. 3 illustrates a system for operating a robot to reduce uncertainty regarding blind spots and other portions of a route using vision data generated from multiple different vision components.
FIG. 4 illustrates a method for maneuvering one or more vision components of a robot based on uncertainty regarding occupancy of an area, as well as estimated resource costs of maneuvering the one or more vision components.
FIG. 5 illustrates a method for selecting a policy for using an adjustable vision component to observe spaces that may affect navigation of a robot through a planned path.
FIG. 6 schematically depicts an example architecture of a robot.
FIG. 7 is a block diagram of an example computer system.

### Detailed Description

Implementations set forth herein relate to systems, methods, and apparatuses for using a combination of vision components to perform real-time observations of anticipated blind spots, which may be apparent when a robot is traversing an area to reach a particular destination. The combination of vision components can, in some implementations, include a LIDAR component that is positioned near a base of a robot, and a stereo camera that is positioned near a head of the robot. Because many robots often include a chassis for supporting one or more motors and other mechanical features for allowing the robots to drive, a camera near a base of the robot can experience blind spots.

In order to collect data that can assist the robot with handling uncertainty caused by blind spots, the component at the head of the robot can operate according to one or more processes in order to monitor for and/or observe such blind spots. As an example, the head component can be a stereo camera that is tasked with capturing images that are processed and used to generate point cloud data. Furthermore, vision data from the base component can also be processed in furtherance of supplementing the information characterized by the point cloud data. In some implementations, the point cloud data can be organized as a two-dimensional (2D) and/or a three-dimensional (3D) space having voxels and/or nodes that correspond to actual points in a space occupied by and/or surrounding the robot. One or more processors of the robot, and/or accessible to the robot, can process images from the LIDAR component and the stereo camera in order to determine whether a particular point in space is worth observing in furtherance of reducing a number of blind spots.

For example, nodes characterized by the point cloud data can be categorized as corresponding to at least an occupied space, an unoccupied space, or an uncategorized space. In some instances, when a robot is initially starting to traverse a route, the robot may need to drive in reverse in order to move away from a wall and/or create space in which to redirect a position of a base of the robot. In such circumstances, and depending on a physical design of the robot, the point cloud data accessible to the robot can indicate that there is a blind spot immediately to the rear of the robot, as well as another blind spot that is located along an expected trajectory of the robot. In order for the robot to handle navigating through and/or around the blind spots or other uncategorized spaces, one or more processors accessible to the robot can generate one or more operational metrics.

An operational metric can be generated to estimate a resource cost for gathering information about one or more uncategorized spaces. Alternatively, or additionally, a cost of observing a first uncategorized space before observing a second uncategorized space can be calculated in order to prioritize observing one uncategorized space over the other, at least when the robot is traversing a route. Alternatively, or additionally, one or more obstacle metrics can be determined for one or more uncategorized spaces that are estimated to be along a trajectory of the robot when the robot is traversing a particular route. An obstacle metric can be used to select a particular operation for the stereo camera to perform in furtherance of observing an uncategorized space simultaneous to the robot traversing a route. For example, when an obstacle metric satisfies a particular threshold, the robot can cause the stereo camera to observe a particular uncategorized space corresponding to the obstacle metric. However, when the obstacle metric does not satisfy the particular threshold, the robot can cause the stereo camera to "sweep" and/or otherwise scan one or more spaces near the robot when the robot is traversing the route.

In some implementations, nodes characterized by the point cloud data can be stored in association with other information that can be used to determine a cost of observing a space corresponding to a particular node. As an example, temporal data associated with certain nodes can indicate a time at which the stereo camera and/or the LIDAR last observed spaces corresponding to the nodes. This temporal data can be used when determining one or more operational metrics for controlling the stereo camera. Alternatively, or additionally, proximity data can be generated to determine a proximity of one or more nodes relative to the robot when the robot is traversing a particular route. In some implementations, the proximity data can also characterize a distance between nodes in order to determine, during a route, a cost of observing all spaces corresponding to the nodes, or less than all spaces corresponding to the nodes (e.g., observing one particular space corresponding to one particular node).

When one or more operational metrics have been generated for observing one or more nodes simultaneous to the robot traversing a particular route, the robot can determine whether an operational metric satisfies a particular threshold. When the operational metric for a particular space along the route satisfies the threshold, the robot can cause the stereo camera to maneuver into a position for observing the space corresponding to the particular node. However, when the operational metric for the particular space in an area does not satisfy a particular threshold, the robot can refrain from causing the stereo camera to maneuver in a direction of the space. Rather, the robot may maneuver the stereo camera towards other areas that correspond to other operational metrics that satisfy one or more thresholds. For instance, the robot can cause the stereo camera to "sweep" the other areas indiscriminately, at least with respect to whether the other areas include uncategorized spaces.

In some implementations, an obstacle metric, corresponding to one or more nodes in the point cloud data, can be determined according information characterizing a number of spaces within an area that corresponds to occupied space, unoccupied space, and/or uncategorized space. For example, a first obstacle metric can be assigned to a node corresponding to a space that includes only occupied space. Alternatively, a second obstacle metric, that is different than the first obstacle metric, can be assigned to another node corresponding to another space that includes only unoccupied space. In some implementations, another obstacle metric can be a value between the first obstacle metric value and the second obstacle metric value when an area corresponding to the other obstacle metric includes at least one designated unoccupied space and one designated occupied space.

In some implementations, the obstacle metric can be directly or indirectly proportional to an operational metric generated by a cost engine that is accessible to the robot. For example, when the robot is traversing a particular area that corresponds to a portion of point cloud data, which includes a plurality of unoccupied spaces and one uncategorized space, an obstacle metric (e.g., ratio of: total occupied space nodes over total unoccupied space nodes) for this particular area can be low relative to other areas. As a result, a resource cost for the robot associated with maneuvering the stereo camera at the portion of uncategorized space can be low relative to if the point cloud data identified at least one occupied space node and/or multiple uncategorized space nodes.

In some implementations, positioning of one or more robot arms can be considered when determining a cost associated with maneuvering the stereo camera in a direction corresponding to an uncategorized space and/or any other space that can be characterized by point cloud data. As an example, a space corresponding to a particular uncategorized space node can be a target for the stereo camera. The stereo camera can capture images that can be processed for identifying information relevant to re-assigning a category of the uncategorized space node to be an occupied node or unoccupied node. In some implementations, one or more processors accessible to the robot can determine that a robot arm is currently, or predicted to be, interfering with an ability of the stereo camera to view the area. Based on this determination, the robot can determine a different orientation in which to position the robot arm, at least in order to avoid obstructing a view of the stereo camera. The subsequently selected orientation for the robot arm can be determined based on the obstacle metric, operational metric, and/or any other metric or metrics that can be used to determine a suitability of an orientation of a robot appendage. For instance, based on determining that the robot arm would be obstructing a view of the unknown space by the stereo camera, the robot can maneuver the robot arm into a position that does not obstruct the view of the unknown space by the camera.

Additionally, or alternatively, the robot can maneuver the robot arm into a position that is selected based on the obstacle metric and/or the operational metric relative to an origin of the robot arm and a final position of the robot arm. As an example, the robot can maneuver the robot arm away from a position that obstructs a view of the uncategorized space by the stereo camera. Furthermore, the robot can determine a final position for the robot arm based on whether a path and/or final position of the robot arm would obstruct a view of another uncategorized space and/or any another space that has exhibited dynamic and/or static occupancy. As an example, when the robot causes the stereo camera to maneuver into a position for viewing an uncategorized space, the robot can determine that the robot arm is obstructing a view of the uncategorized space by the stereo camera. Based on this determination, the robot can subsequently decide where to position the robot arm between a robot frame of the robot and an occupied space, or between the robot frame of the robot and another uncategorized space. Because this decision is between an occupied space and another uncategorized space, the robot can determine that there is more value in maneuvering the robot arm to obstruct a view of the occupied space. In this way, should the robot need to subsequently direct the stereo camera to the other uncategorized space, the other uncategorized space would not be obstructed by the robot arm.

In some implementations, a variety of different metrics can be used to determine where to position the robot arm relative to the stereo camera. As an example, the robot can determine a likelihood that various nodes characterized by the point cloud data correspond to spaces that may be traversed by the robot during a particular excursion of the robot. During an excursion, the robot may need to maneuver the robot arm in order to avoid obstructing the view of the stereo. The robot can elect to maneuver the robot arm to potentially obstruct a view of another uncategorized space that is not located along a predicted route of the robot, in order to avoid obstructing a view of an unoccupied space and/or an occupied space this is located along the predicted route of the robot. These and other determinations can be based on one or more metrics that can provide an indication of whether any value will be gained, and/or costs will be incurred, by maneuvering the stereo camera in a particular direction and/or arranging a robot arm into a particular position.

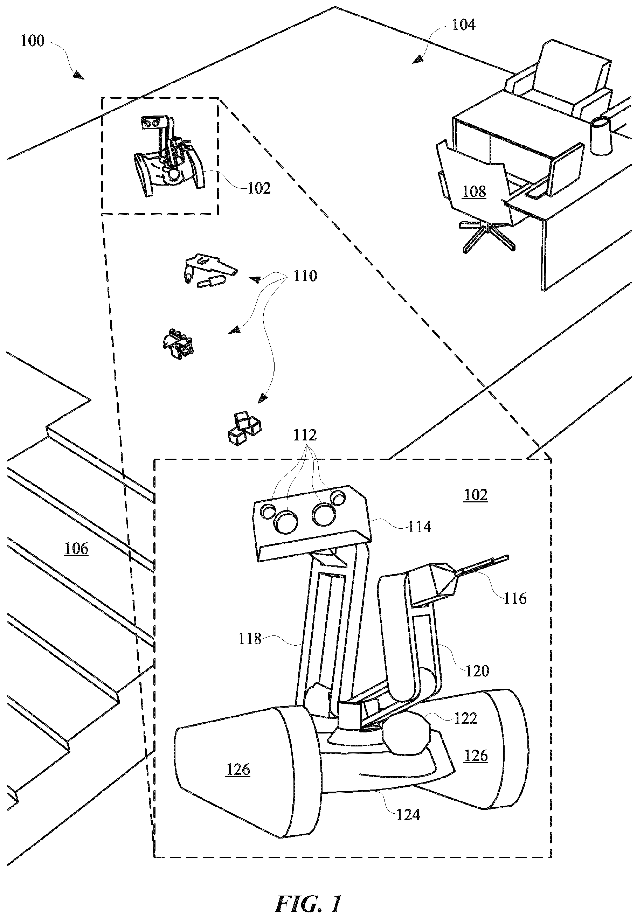

FIG. 1 illustrates a view 100 of a robot 102 that is navigating in an environment 104 using first vision component 112 that can be used to compensate for uncertainty that can be exhibited by the robot 102 when relying on a second vision component 122. For instance, the second vision component 122 can have a field of view that is greater than a field of view of the first vision component 112, but the second vision component 122 can have a "blind spot" that the first vision component 112 does not have. Specifically, the second vision component 122 can have a blind spot caused by a robot frame and/or other portion of the robot 102. In some implementations, the blind spot of the second vision component 122 can be caused by wheels 126, a first robot arm 118, a second robot arm 120, a body 124, and/or any other portion of a robot.

In some implementations, the second vision component 122 can be a spinning LIDAR that has a fixed pose relative to the frame of the robot 102, and the first vision component 112 can be a stereographic camera. The first vision component 112 can be attached to a head 114 of the robot 102 and therefore be located at an upper half of the robot 102, and the second vision component 122 can be attached to a lower half of the robot 102. The head 114 can have a pose that is adjustable according to movement of the first robot arm 118, thereby allowing the first vision component 112 to be directed toward various spaces within the environment 104. This can allow the robot 102 to generate vision data that characterizes features of the environment 104 while the robot 102 is traversing the environment 104, without necessarily experiencing blind spots from the second vision component 122.

In some implementations, the robot 102 can anticipate blind spots that can result from maneuvering the first robot arm 118 and/or a second robot arm 120. For example, the robot 102 can maneuver the first robot arm 118 in order to direct the head 114 toward a blind spot that the second vision component 122 is experiencing. Before and/or during the repositioning of the head 114, the robot 102 can determine whether a current position of the second robot arm 120 would be obstructing the view of the first vision component 112 if the first vision component 112 was directed toward the blind spot of the second vision component 122. When the robot 102 determines that the second robot arm 120 would be obstructing the view of the first vision component 112, the robot 102 can cause the second robot arm 120 to be maneuvered to a different position relative to the body 124. However, if the robot 102 determines that the second robot arm 120 will not obstruct a view of the blind spot for the first vision component 112, the robot 102 can proceed with repositioning the head 114 without modifying a planned position for the second robot arm 120.

In some implementations, the robot 102 can perform path planning and/or adapt a trajectory of the robot 102 in order to avoid spaces within an environment 104 that the robot 102 may deem uncertain with respect to other spaces. For instance, the robot 102 can be tasked with picking up object 110 in order to clean a home of a user of the robot 102 and then go downstairs shortly thereafter. However, as a result of some maneuvering to pick up the objects 110, the second vision component 122 can experience a blind spot, for instance, with respect to another object within the environment 104, such as a chair 108. Although the chair 108 may not affect the trajectory and/or planned path of the robot 102, the chair 108 may occasionally occupy a blind spot of the robot 102. Furthermore, the robot 102 can classify the chair 108 as a dynamic position object, thereby indicating that the chair 108 does not have a fixed position and/or can experience a trajectory. In order to reduce some amount of uncertainty with respect to the chair 108 and/or any other object in the environment 104, the robot 102 can operate according to one or more different processes for reducing uncertainty while navigating the environment 104.

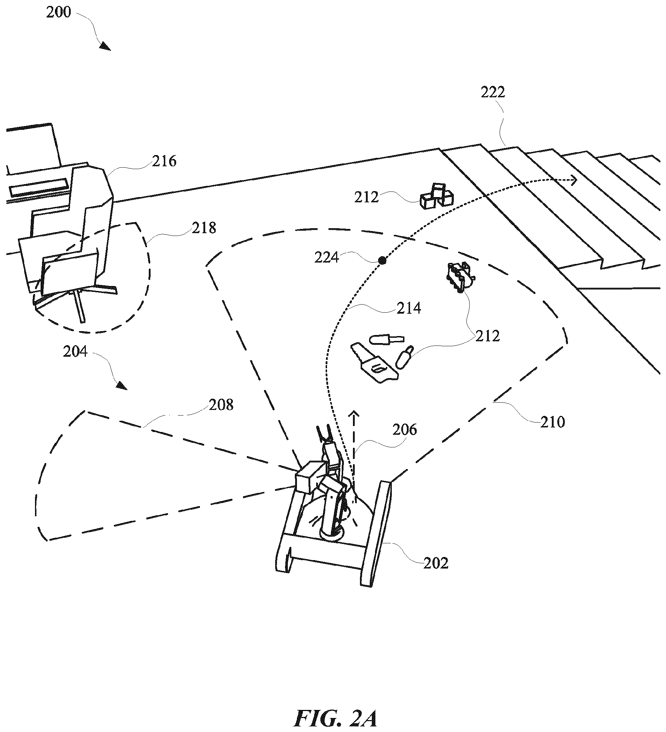

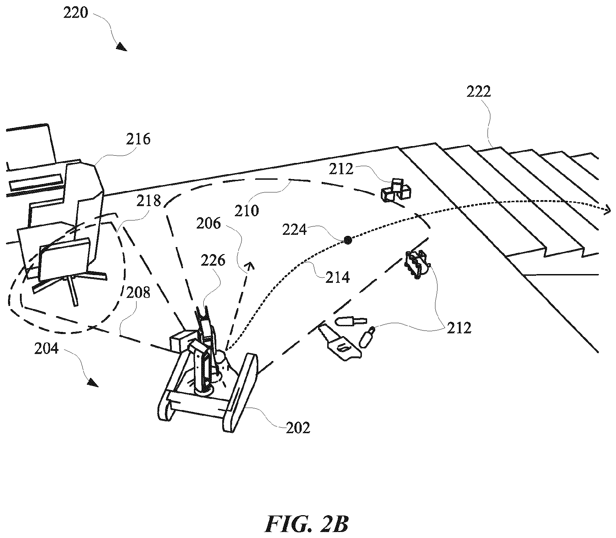

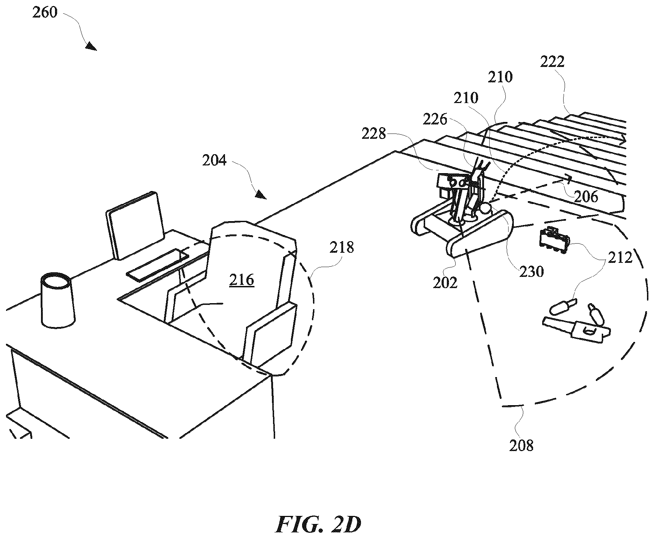

FIG. 2A, FIG. 2B, FIC. 2C, and FIG. 2D illustrate a view 200, a view 220, a view 240, and a view 260 of a robot 202 that employs multiple vision components in order to reduce uncertainty with respect to, for example, occupancy of an environment 204 and/or blind spots experienced by the robot 202. The robot 202 can include a first vision component 228 and a second vision component 230 that are operatively coupled to the robot 202 and are mounted onto a body of the robot 202. The first vision component 228 can have a field of view that is constrained at least relative to another field of view of the second vision component 230. However, the second vision component 230 can have a fixed pose relative to a robot frame of the robot 202 and the first vision component 228 can have an adjustable pose relative to the robot frame. For instance, the first vision component 228 can include a passive and/or active stereographic camera that is mounted onto the robot 202 and the second vision component 230 can be a LIDAR, such as a spinning LIDAR that is mounted on the robot 202.

In some implementations, vision data can be generated based on inputs to the first vision component 228 and the second vision component 230 in order that a trajectory and/or a path of the robot 202 can be adapted according to the vision data. As an example, the robot 202 can have a planned path 214 that involves maneuvering the robot 202 from a second floor of a home of a user, down a flight of stairs 222, to a first floor of the home. Further, the robot 202 can have a trajectory 206 that is updated in real-time in order to compensate for variations in the environment 204 as the robot 202 completes the planned path 214. In some instances, while the navigating to a final destination of the planned path 214, the trajectory 206 of the robot 202 can change and/or a planned path 214 of the robot 202 can be modified.

As an example, and as illustrated in FIG. 2A, the robot 202 can initially have a trajectory 206 and a planned path 214, which can involve the robot 202 maneuvering between objects 212 and avoiding any potential collision with an object 216 in order to arrive at the stairs 222. The robot 202 can generate vision data using the first vision component 228, which has a first field of view 210 and a second vision component 230, which has a second field of view 208. As the robot 202 is moving along the trajectory 206 and/or the planned path 214, the robot 202 can determine that, at a particular point 224 along the trajectory 206, the second vision component 230 will have a blind spot 218. The blind spot 218 can result from a portion of a frame of the robot 202 being located between the second vision component 230 and the object 216.

In some implementations, the object 216 can initially be within the first field of view 210 of the second vision component 230 when the robot 202 is approaching the stairs 222, but the object 216 can be outside of the first field of view 210 as the robot 202 continues along the planned path 214. When the object 216 is initially located in the first field of view 210 and/or when the robot 202 determines that the blind spot 218 will be apparent during navigation along the planned path 214, the robot 202 can determine candidate poses for the first vision component 228. Specifically, the robot 202 can generate candidate positions that can be static and/or dynamic as the robot 202 maneuvers to the final destination. In some implementations, multiple different candidate positions can be generated as potential positions for the first vision component 228 to be held in while robot 202 is maneuvering along the planned path 214. Additionally, or alternatively, the multiple different candidate positions can include one or more dynamic positions, thereby allowing the first vision component 228 to be maneuvered through multiple different poses as the robot 202 continues maneuvering along the planned path 214.

FIG. 2B illustrates a view 220 of the robot 202 maneuvering the first vision component 228 toward the blind spot 218 in order to optimize a selected trajectory 206 and/or planned path 214 for the robot 202, while the robot 202 is navigating to a final destination. Specifically, while the robot 202 is navigating along the planned path 214, the robot 202 can determine that the second vision component 230 will have a blind spot 218 when the robot 202 reaches the particular point 224. Based on this determination, the robot 202 can maneuver the first field of view 210 toward the blind spot 218 in order to determine whether any objects are located in the blind spot 218, identify a classification for any identified objects, and/or modify the trajectory 206 and/or planned path 214 according to the classification of the object 216.

In some implementations, the robot 202 can include at least one robot arm 226, which can be used to pick up various objects 212. However, in some instances, when the robot 202 is determining candidate positions for the first vision component 228 to be maneuvered into, the robot 202 can also determine whether the robot arm 226 will block a view of the object 216 by the first field of view 210. For instance, the robot 202 can determine one or more other candidate positions for the robot arm 226 and candidate positions for the first vision component 228. The robot 202 can then rank the candidate positions and the other candidate positions according to how obstructed the second field of view 208 will be by the robot arm 226 when the first vision component 228 is maneuvered into a corresponding candidate position. The robot 202 can then select a most prioritized first vision component 228 position and a most prioritized robot arm 226 position. Thereafter, when the robot 202 reaches the particular point 224, the robot 202 can maneuver robot arm 226 into the most prioritized other candidate position, and also maneuver the first vision component 228 into the most prioritized candidate position.

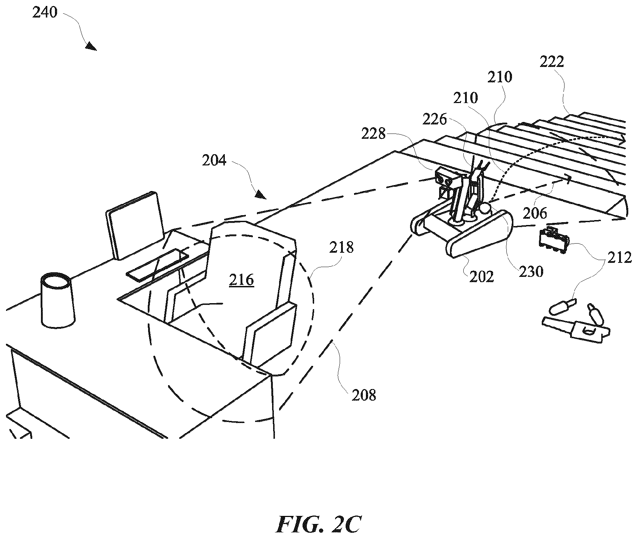

In some implementations, the robot 202 can cause the first vision component 228 to observe anticipated blind spot 218 as the robot 202 approaches the particular point 224 in order to generate vision data based on observing the blind spot 218. For instance, the vision data characterizing the blind spot 218 can be used to determine an identity and/or other properties of the object 216 such as, but not limited to, velocity, size, trajectory, acceleration, weight, density, and/or any other property of the object 216. This information about the object 216 can be used by the robot 202 for determining candidate positions for the first vision component 228, the robot arm 226, and/or for modifying a planned path 214 and/or trajectory 206 of the robot 202. For example, when the robot 202 determines that the object 216 is static with a velocity of 0 m/s and/or a trajectory 206 that indicates the object 216 is idle, any candidate position that causes the first vision component 228 to view the object 216 can be assigned a lower priority relative to if the object 216 was determined to not be idle and/or have a non-zero velocity. For instance, FIG. 2C illustrates a perspective view 240 of the robot 202 having prioritized a candidate position that causes the first vision component 228 to maneuver into a pose for viewing the blind spot 218.

FIG. 2C illustrates the robot 202 reaching the particular point 224 and maneuvering the first vision component 228 into a candidate position for viewing the object 216, which is located in a blind spot 218 of the second vision component 230. In some implementations, the robot 202 can determine to maneuver the first vision component 228 into the position based on the position depicted in FIG. 2C corresponding to a most prioritized candidate position. In some implementations, the most prioritized position can be determined based on properties of the object 216 and previously captured vision data. For instance, the object 216 can be determined to have a history of moving (e.g., when a person is at or near the chair), thereby increasing an incentive for the robot 202 to observe the object 216 in order to increase a certainty and/or accuracy of the properties of the object 216 (e.g., whether the object 216 is likely to move).

As an example, when an uncertainty of a trajectory of the object 216 is at a particular value, a velocity of the robot 202 as the robot 202 maneuvers along the planned path 214 can be slower relative to when the uncertainty of the trajectory of the object 216 is less relative to the particular value. This can incentivize the robot 202 to observe the blind spot 218 and the object 216 during the route in order reduce a time to reach the final destination, which can decrease power consumption of the robot 202.

As depicted in view 260 of FIG. 2D, when the object 216 is determined to have a history of being a static object (at least for a majority of a time since the object 216 was first observed by the robot 202), the priority for posing the first vision component 228 to view the blind spot 218 during the planned path 214 can be less prioritized relative to a priority for posing the first vision component 228 toward other objects 212 near the planned path 214 of the robot 202. This can result in the robot 202 viewing the objects 212 instead of the object 216 while the robot 202 is traversing through the planned path 214. In some implementations, a determination for a position of the first vision component 228, the second vision component 230, the robot arm 226, and/or any other controllable feature of the robot 202 can be based on occupancy metrics, operational metrics, and/or any other features of the robot 202 and/or the environment 204.

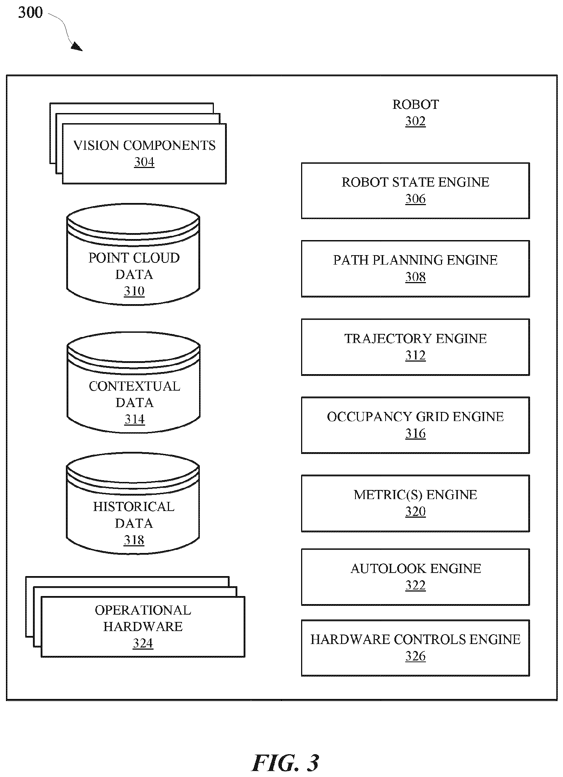

FIG. 3 illustrates a system 300 for operating a robot 302 to reduce uncertainty regarding blind spots and other portions of a route using vision data generated from multiple different vision components 304. Specifically, the robot 302 can include a stereographic camera having an orientation that is configurable by the robot 302 and a LIDAR that has a static pose relative to a robot frame of the robot 302. The vision components 304 can provide output, such as 2D, 2.5 D, and/or 3D data, which can be used by the robot 302 to generate point cloud data 310. In some implementations, the point cloud data 310 can be accessed by an occupancy grid engine 316 in order to predict and/or estimate occupancy of spaces (*e.g.,* a 1D, 2D, and/or 3D space) within an environment in which the robot 302 is maneuvering.

An occupancy grid generated by the occupancy grid engine 316 can include multiple different nodes characterizing portions of an environment in which the robot 302 is navigating. Furthermore, data characterizing a node of the nodes can be correlated with information characterizing a particular space in the environment, an object, attributes of the object, attributes of the space, and/or any other information that can be useful for a robot 302. In some implementations, point cloud data 310 can be updated in real-time according to observations made by the vision components 304. Furthermore, the point cloud data 310 can be used in order to make determinations about how to modify a position of one or more vision components 304 as the robot 302 is navigating an environment.

As an example, the point cloud data 310 can indicate that, historically, a certain space that is observable along a route of the robot 302 has included a dynamic object. As a result, a hardware control engine 326 and/or trajectory engine 312 can modify a velocity of the robot 302 when the robot 302 is approaching the certain space. However, in order to optimize the route of the robot 302, the path planning engine 308 can determine whether the certain space will be in a blind spot of one or more vision components 304 of the robot 302 when the robot 302 is traversing the route. When the certain space is determined to be in a blind spot of a vision component during an upcoming portion of a route, the robot 302 can determine whether to use another vision component to observe the certain space at some point during the route. In some implementations, the robot 302 can employ a metric(s) engine 320 for generating one or more metrics that can be used when determining whether to use the other vision component to observe the certain space prior to arriving at a point along a planned path that is most proximate to the certain space.

In some implementations, an operational metric can be generated for determining whether to maneuver the other vision component (*e.g*., an adjustable stereographic camera) into a position for observing the certain space. The operational metric can be generated based on historical data that indicates previous instances when the robot 302 employed a vision component 304 to observe the certain space or a similar space. Furthermore, the historical data can indicate whether such instances resulted in changes to a trajectory and/or planned path as a result of using a vision component 304 to observe the certain space or a similar space. If one or more previous instances did not result in changes to previous trajectory and/or previously planned path, the operational metric can indicate that observing the certain space is less of a priority relative to if the one or more previous instances did result in changes to a previous trajectory and/or previously planned path.

In some implementations, an obstacle metric can be generated by the metric engine 320 in order to determine whether to operate one or more vision components 304 to sweep an area that is at or near an environment being traversed by the robot 302, and/or maneuver one or more vision components 304 to focus on one or more spaces within the environment. As an example, an autolook engine 322 can use an obstacle metric generated by a metric engine 320 to determine whether the obstacle metric satisfies a threshold for operating a vision component 304 according to a first policy (*e.g.,* sweeping an area) or a second policy (*e.g.,* focusing on one or more spaces). The obstacle metric can be generated based on the point cloud data 310, contextual data 314, and/or historical data 318. For instance, a value for the obstacle metric can be based on point cloud data generated from another vision component (*e.g.*, LIDAR) of the robot 302. The value can be, for example, a clutter ratio that provides a ratio that characterizes an occupancy of a space. The clutter ratio can be lower when there are fewer objects occupying the space, and can be higher when there are a higher number of objects occupying the space. In some implementations, other sensors beyond the vision components 304 can be used to generate metrics and/or any other information that can be used to make a determination about whether to maneuver an adjustable vision component to observe a certain space along a planned path. In some implementations, sensor fusion can be performed for combining data that is generated from various components of the robot 302, such as one or more sensors and/or one or more vision components 304.

In some implementations, data generated based on each vision component 304 can be processed via a respective vision component pipeline. For instance, a first vision component can generate data that is processed via a first pipeline and a second vision component can generate other data that is processed via a second pipeline. The first pipeline can refer to one or more modules used to process image data generated based on the first vision component, and the second pipeline can refer to one or more other modules used to process other image data generated based on the second vision component. The one or more modules of the first pipeline can identify classifications of objects, poses of objects, and/or motion of objects, and/or any other features of objects that can be observed via a particular vision component. In other words, the one or more modules of the first pipeline can optionally be trained and/or otherwise directed to process data from the first vision component (*e.g*., a stereo camera). The one or more other modules of the second pipeline can also identify classifications of objects, poses of objects, and/or motion of objects, and/or any other features of objects that can be observed via a different vision component. In other words, the one or more other modules of the second pipeline can optionally be trained and/or otherwise directed to process other data from the second vision component (*e.g*., LIDAR).

Output from modules of the first pipeline and the second pipeline can be combined in order to make determinations about how to maneuver one or more features of the robot 302 while the robot 302 is maneuvering along a path and/or toward a particular destination. As an example, data from a first vision component can be processed via a first pipeline and, based on the processing, the data can indicate that there is a 0.66 probability that a chair in a path of the robot 302 is inclined and occupied. Furthermore, other data from a second vision component can be processed via a second pipeline and, based on the processing, the other data can indicate that there is a 0.83 probability that the same chair is inclined and occupied. These two values can be combined (*e.g.,* by calculating an average or other value) in order to obtain a combined value regarding a characteristic of an object (*e.g*., the chair). The combined value can be compared to a threshold and/or one or more other metrics in order to make a determination of whether to modify a trajectory and/or other motion of the robot 302. For instance, the combined value can be compared to a threshold value, and/or processed using a trained machine learning model, in furtherance of generating instructions to cause the robot 302 to navigate further away from the object. As an example, when the combined value indicates that the object is an inclined chair, the determination can be based on an assumption that inclined chairs exhibit more unpredictable motion relative to non-inclined chairs, and should therefore be avoided. Allowing each vision component to generate data that is processed in a separately assigned pipeline can ensure that data from different types of vision components will be processed via more suitable pipelines.

In some implementations, a robot state engine 306 can be used by the autolook engine 322 to determine whether operational hardware 324, such as a robot arm and/or other portion of the robot 302, will be interfering with a field of view of one or more vision components 304. Specifically, the robot state engine 306 can provide information to the autolook engine 322 for determining whether to maneuver the operational hardware 324 to be out of a field of view of a vision component 304 and/or whether to move a vision component 304 to another position. For instance, when the autolook engine 322 determines that a stereographic camera should be maneuvered into a position for observing a space having some amount of uncertainty, the autolook engine 322 can use robot status information to determine whether a current position of a robot arm would be obstructing a view of the stereographic camera when maneuvered into the position. In some implementations, one or more candidate positions can be determined for a vision component and/or the robot arm, and an operational metric can be determined for each position of the vision component and/or the robot arm. Thereafter, positions corresponding to a metric characterizing lowest resource usage for the robot arm and/or vision component can be selected for maneuvering the vision component and/or robot arm into.

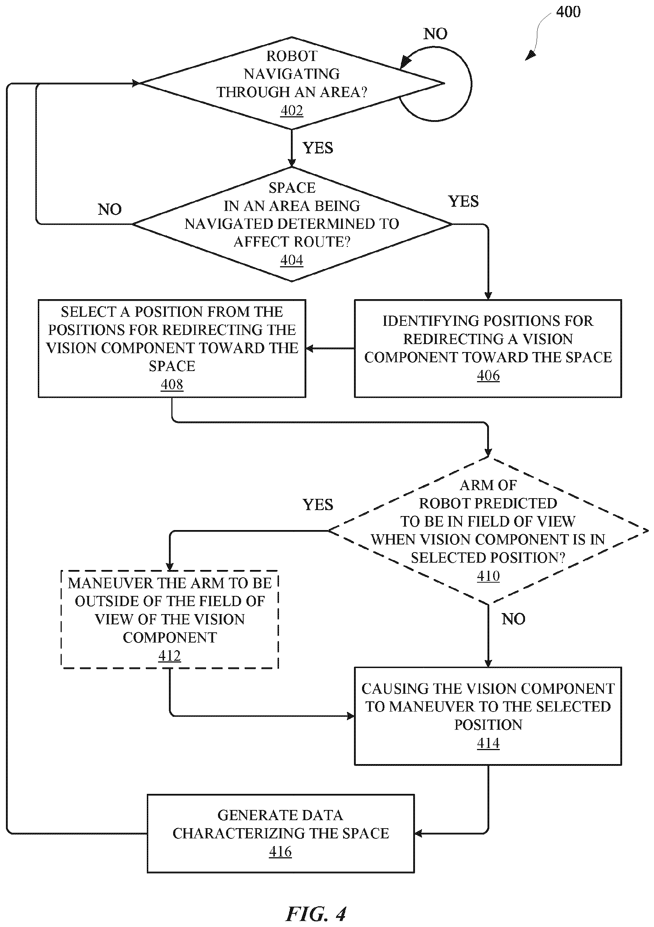

FIG. 4 illustrates a method 400 for maneuvering one or more vision components of a robot based on uncertainty regarding occupancy of an area, as well as estimated resource costs of maneuvering the one or more vision components. The method 400 can be performed by one or more applications, processors, and/or any other apparatus or module capable of controlling and/or interacting with a robot. The method 400 can include an operation 402 of determining whether the robot is navigating through an area. The robot can be an autonomous computing device that maneuvers through an environment using one or more sensors and one or more different data processing techniques. Furthermore, the robot can include one or more arms or other appendages for handling certain objects that may be within an environment that the robot is navigating through. When the robot is determined to be navigating through the area, the method 400 can proceed from the operation 402 to an operation 404. Alternatively, when the robot is not navigating through the area, the method 400 can bypass proceeding to the operation 404 and return to the operation 402.

The operation 404 can include determining whether a space in the area being navigated by the robot is determined to affect a route of the robot. In some implementations, the operation 404 can include determining whether the space in the area being navigated by the robot is determined to affect a path of the robot and/or a trajectory of the robot. As an example, the space within the area can be determined to affect the route of the robot when the robot is operating with some amount of uncertainty regarding occupancy of the space. In some implementations, the amount of uncertainty can be characterized by one or more metrics which can be generated according to one or more processes. For example, uncertainty with respect to a space can be considered high when the space has not been categorized by the robot and/or any other device that is associated with the robot. Alternatively, or additionally, the uncertainty with respect to the space can be considered low when the space has been categorized as either occupied or free space. In some implementations, uncertainty can be based on whether any adjacent spaces are categorized as occupied space, free space, or uncategorized space. In this way, a space may be considered even more uncertain when the space has not been categorized and is determined to be adjacent to other spaces that have not been categorized.

When a space is determined to affect the route of the robot, the method 400 can proceed to an operation 406 of identifying positions for redirecting a vision component of the robot toward the space. Alternatively, when the space is determined to not affect the route of the robot, the method 400 can proceed from the operation 404 back to the operation 402. The operation 406 can be performed by identifying multiple different positions for the vision component of the robot and storing data characterizing the positions as candidate position data. In some implementations, the vision component can be located at a top half of the robot and another vision component can be located at a bottom half of the robot. The other vision component can be a spinning LIDAR that has fixed position relative to a robot frame of the robot, and the vision component at the top half can be a stereographic camera that has an adjustable position relative to the robot frame of the robot.

In order to increase certainty about a space that has been observed by the spinning LIDAR, the robot can maneuver the stereographic camera into a position for observing the identified space. The method 400 can proceed from the operation 406 to an operation 408 of selecting a position from positions for redirecting the vision component toward the space. The position can be selected based on one or more different metrics, such as operational metrics that indicate an amount of resources that may be consumed when redirecting the stereographic camera towards the space. Alternatively, or additionally, an obstacle metric can be determined for each position in order to identify a particular position for the stereographic camera that results in the most operational benefits for the robot when traversing the route. For example, a first obstacle metric for a first position of the stereographic camera can be identified as being more beneficial to the robot, at least relative to a second obstacle metric for a second position of the stereographic camera. Specifically, the first position of the stereographic camera can cause the stereographic camera to view more uncertain space then compared to if the stereographic camera was maneuvered into the second position. In some implementations, the obstacle metrics and the operational metrics corresponding to the identified positions can be analyzed to identify a most suitable position for the stereographic camera.

In some implementations, the method 400 can proceed from an operation 408 to an optional operation 410 that includes determining whether an arm of the robot is predicted to be in a field of view of the vision component, when the vision component is maneuvered into the selected position. The arm can include one or more portions of the robot that is separately adjustable from the stereographic camera. For example, in some implementations, the arm can be a robotic appendage that includes one or more motors and is capable of maneuvering simultaneous to the robot traversing an environment. In some implementations, the robot arm can be an electromechanical appendage capable of picking up and setting down different objects. When the arm is determined to be in the field of view of the vision component when the arm is maneuvered into the selected position, the method 400 can proceed from the operation 410 to an operation 412. When the arm is determined to not be in the field of view of the vision component while the arm is maneuvered into the selected position, the method 400 can proceed from the operation 410 to an operation 414.

The operation 412 can include maneuvering the arm to be outside of the field of view of the vision component. As an example, the vision component can have a field of view that is less than 90 degrees, and can therefore include a volume of space around the robot that is within the 90 degree field of view. In order to maneuver the arm to be outside of the field of view, the robot can identify coordinates, such any 2D, 3D, 4D, 5D, 6D, and/or any other number of dimensions of coordinates, as a destination for the arm that is outside of the field of view and outside that volume of space. In some implementations, when the arm is determined to not be in the field of view of the vision component while the arm is maneuvered into the selected position, the method 400 can proceed from the operation 410 to the operation 414.

The operation 414 can include causing the vision component to maneuver to the selected position. When the vision component is maneuvered into the selected position, the vision component can have a field of view that includes the space that was determined to affect the route of the robot. The method 400 can proceed from the operation 414 to an operation 416 that includes generating data characterizing the space. The generated data can be vision data that characterizes one or more features and/or properties of the space within the area. In some implementations, the vision data can be used by the robot, simultaneous to the robot navigating through the area, for path planning and/or trajectory planning. As an example, the vision data captured using the stereographic camera can be used, in real-time, to modify a trajectory of the robot. Alternatively, or additionally, the vision data captured using the stereographic camera can be used to modify a path of the robot in order to achieve a more efficient route with respect to, for example, dodging obstacles, finding a shortest path, consuming less energy, arriving at a destination on-time and/or early, and/or any other property of an efficient route for a robot. As the robot continues along the route, the method 400 can proceed from the operation 416 to the operation 402 for continuing to monitor spaces within the area that may affect the route of the robot.

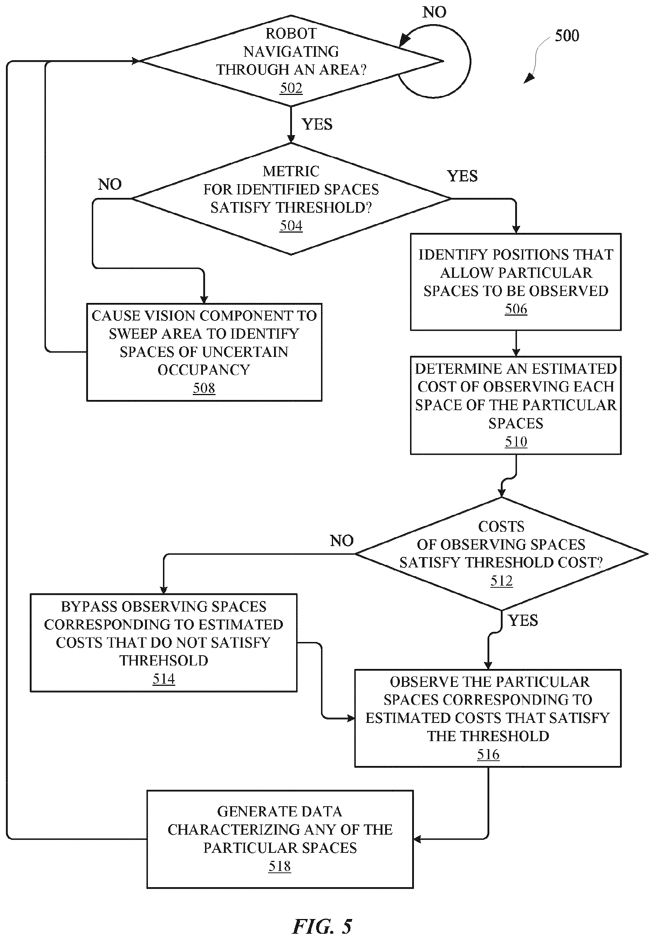

FIG. 5 illustrates a method 500 for selecting a policy for using an adjustable vision component to observe spaces that may affect navigation of a robot through a planned path. The method 500 can be performed by one or more computing devices, applications, and/or any other apparatus or module capable of interacting with a robot. The method 500 can include determining whether the robot is navigating through an area. When the robot is determined to be navigating through an area (e.g., not idle), the method 500 can proceed to an operation 504. However, if the robot is determined to not be navigating through an area, the operation 402 can be repeated.

The operation 504 can include determining whether a metric associated with one or more spaces identified in the area satisfies a threshold. In some implementations, the metric can be an obstacle metric, which can characterize an occupancy of one or more spaces within the area. The obstacle metric can be determined based on data gathered while the robot is currently navigating the area and/or based on previous data generated based on information collected when the robot was previously navigating the area. When the metric is determined to not satisfy the threshold, the method 500 can proceed to the operation 502. When the metric is determined to satisfy the threshold, the method 500 can proceed from the operation 504 to an operation 506.

The operation 506 can include identifying positions for one or more vision components that will allow the one or more vision components to view a space corresponding to a metric that satisfied the threshold. In some implementations, the threshold can be dynamically adjusted based on a type of robot that is maneuvering, attributes of an environment, attributes of a space identified by the robot, and/or any other property and/or feature that can be associated with the robot. The method 500 can further proceed to an operation 510 that includes determining an estimated cost of observing each space of the particular spaces that were identified.

Based on determining the estimated operational costs of maneuvering a vision component to observe such spaces, the method 500 can proceed to an operation 512 of determining whether the cost of observing such spaces satisfies a cost threshold. When a cost of observing a particular space does not satisfy the threshold cost, the method 500 can proceed to an operation 514 of bypassing observing the particular space corresponding to the estimated operational cost that does not satisfy the threshold. However, when the cost of observing a particular space does satisfy the threshold cost, the method 500 can proceed to an operation 516. The operation 516 can include causing the vision component to observe the particular spaces corresponding to the operational costs that satisfy the threshold. Thereafter, the method 500 can proceed to an operation 518 of generating data characterizing any of the particular spaces that have been observed by the vision component. In some implementations, the generated data can be used subsequently by the robot to generate other metrics for use during subsequent excursions by the robot.

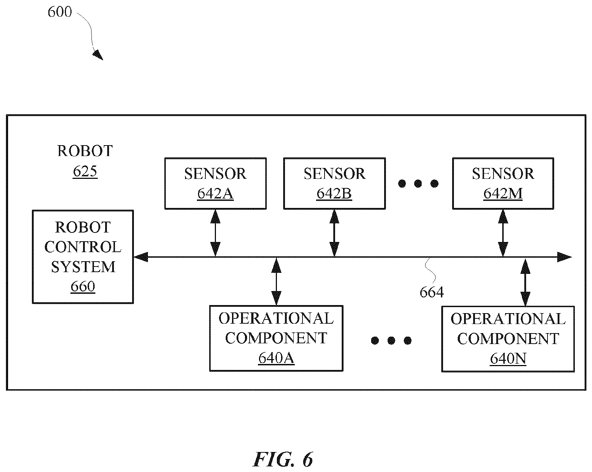

FIG. 6 schematically depicts an example architecture of a robot 625. The robot 625 includes a robot control system 660, one or more operational components 640A-640N, and one or more sensors 642A-642M. The sensors 642A-642M may include, for example, vision components, light sensors, pressure sensors, pressure wave sensors (e.g., microphones), proximity sensors, accelerometers, gyroscopes, thermometers, barometers, and so forth. While sensors 642A-642M are depicted as being integral with robot 625, this is not meant to be limiting. In some implementations, sensors 642A-642M may be located external to robot 625, e.g., as standalone units.

Operational components 640A-640N may include, for example, one or more end effectors and/or one or more servo motors or other actuators to effectuate movement of one or more components of the robot. For example, the robot 625 may have multiple degrees of freedom and each of the actuators may control actuation of the robot 625 within one or more of the degrees of freedom responsive to the control commands. As used herein, the term actuator encompasses a mechanical or electrical device that creates motion (e.g., a motor), in addition to any driver(s) that may be associated with the actuator and that translate received control commands into one or more signals for driving the actuator. Accordingly, providing a control command to an actuator may comprise providing the control command to a driver that translates the control command into appropriate signals for driving an electrical or mechanical device to create desired motion.

The robot control system 660 may be implemented in one or more processors, such as a CPU, GPU, and/or other controller(s) of the robot 625. In some implementations, the robot 625 may comprise a "brain box" that may include all or aspects of the control system 660. For example, the brain box may provide real time bursts of data to the operational components 640A-640N, with each of the real time bursts comprising a set of one or more control commands that dictate, *inter alia,* the parameters of motion (if any) for each of one or more of the operational components 640A-640N. In some implementations, the robot control system 660 may perform one or more aspects of one or more methods described herein.

As described herein, in some implementations all or aspects of the control commands generated by control system 660 can be generated based on 3D bounding shapes generated according to techniques described herein. Although control system 660 is illustrated in FIG. 6 as an integral part of the robot 625, in some implementations, all or aspects of the control system 660 may be implemented in a component that is separate from, but in communication with, robot 625. For example, all or aspects of control system 660 may be implemented on one or more computing devices that are in wired and/or wireless communication with the robot 625, such as computer system 710.

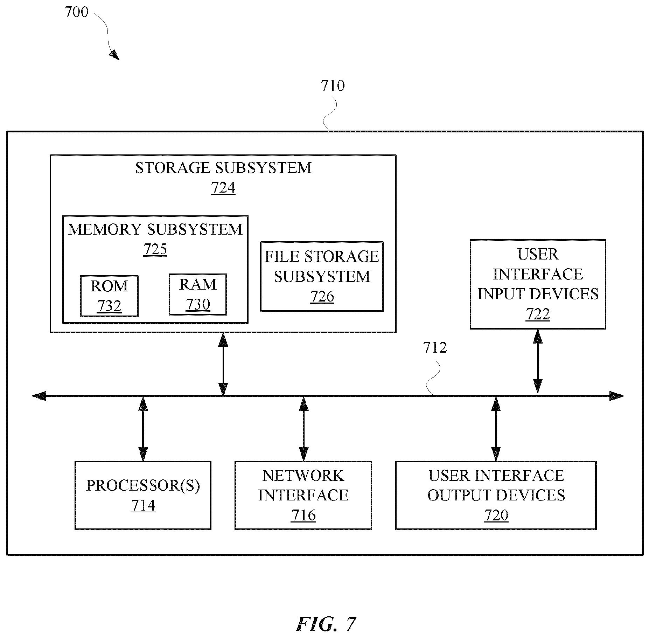

FIG. 7 is a block diagram of an example computer system 710. Computer system 710 typically includes at least one processor 714 which communicates with a number of peripheral devices via bus subsystem 712. These peripheral devices may include a storage subsystem 724, including, for example, a memory 725 and a file storage subsystem 726, user interface output devices 720, user interface input devices 722, and a network interface subsystem 716. The input and output devices allow user interaction with computer system 710. Network interface subsystem 716 provides an interface to outside networks and is coupled to corresponding interface devices in other computer systems.

User interface input devices 722 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into computer system 710 or onto a communication network.

User interface output devices 720 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from computer system 710 to the user or to another machine or computer system.

Storage subsystem 724 stores programming and data constructs that provide the functionality of some or all of the modules described herein. For example, the storage subsystem 724 may include the logic to perform selected aspects of method 400, method 500 and/or to implement one or more of robot 102, robot 202, robot 302, and/or any other apparatus, engine, and/or module discussed herein.

These software modules are generally executed by processor 714 alone or in combination with other processors. Memory 725 used in the storage subsystem 724 can include a number of memories including a main random access memory (RAM) 730 for storage of instructions and data during program execution and a read only memory (ROM) 732 in which fixed instructions are stored. A file storage subsystem 726 can provide persistent storage for program and data files, and may include a hard disk drive, a floppy disk drive along with associated removable media, a CD-ROM drive, an optical drive, or removable media cartridges. The modules implementing the functionality of certain implementations may be stored by file storage subsystem 726 in the storage subsystem 724, or in other machines accessible by the processor(s) 714.

Bus subsystem 712 provides a mechanism for letting the various components and subsystems of computer system 710 communicate with each other as intended. Although bus subsystem 712 is shown schematically as a single bus, alternative implementations of the bus subsystem may use multiple busses.

Computer system 710 can be of varying types including a workstation, server, computing cluster, blade server, server farm, or any other data processing system or computing device. Due to the ever-changing nature of computers and networks, the description of computer system 710 depicted in FIG. 7 is intended only as a specific example for purposes of illustrating some implementations. Many other configurations of computer system 710 are possible having more or fewer components than the computer system depicted in FIG. 7.

**In** situations in which the systems described herein collect personal information about users (or as often referred to herein, "participants"), or may make use of personal information, the users may be provided with an opportunity to control whether programs or features collect user information (e.g., information about a user's social network, social actions or activities, profession, a user's preferences, or a user's current geographic location), or to control whether and/or how to receive content from the content server that may be more relevant to the user. Also, certain data may be treated in one or more ways before it is stored or used, so that personal identifiable information is removed. For example, a user's identity may be treated so that no personal identifiable information can be determined for the user, or a user's geographic location may be generalized where geographic location information is obtained (such as to a city, ZIP code, or state level), so that a particular geographic location of a user cannot be determined. Thus, the user may have control over how information is collected about the user and/or used.

While several implementations have been described and illustrated herein, a variety of other means and/or structures for performing the function and/or obtaining the results and/or one or more of the advantages described herein may be utilized.

In some implementations, a method implemented by one or more processors is set forth as including operations such as, while a robot is navigating through an environment: capturing instances of first vision data using a fixed vision component that has a fixed pose relative to a robot frame of the robot and a first field of view, wherein the fixed vision component and an adjustable vision component are operatively coupled to the robot. The method can further include an operation of adjusting, while capturing the instances of first vision data, the adjustable vision component through various poses of the adjustable vision component relative to the robot frame, wherein the adjustable vision component has a second field of view that is more constrained than the first field of view of the fixed vision component. The method can further include an operation of capturing instances of second vision data using the adjustable vision component, wherein the instances of second vision data are captured when the adjustable vision component is positioned into multiple different poses of the various poses of the adjustable vision component. The method can further include an operation of controlling navigation of the robot based on both: the instances of the first vision data and the instances of the second vision data.

In some implementations, the robot includes an adjustable appendage, and adjusting the adjustable vision component through the various poses includes: determining a particular pose, of the various poses, to which to adjust the adjustable vision component, determining whether the adjustable appendage will, if unaltered, block at least a threshold amount of the second field of view of the adjustable vision component when the adjustable vision component is adjusted to the particular pose, and when it is determined that the adjustable appendage will, if unaltered, block at least the threshold amount of the second field of view when the adjustable vision component is adjusted to the particular pose: controlling the adjustable appendage to maneuver the adjustable appendage into an alternate pose before and/or during adjustment of the adjustable vision component into the particular pose.

In some implementations, the method can further include an operation of, when the adjustable appendage is determined to, if unaltered, not block at least the threshold amount of the second field of view when the adjustable vision component is adjusted to the particular pose: bypassing controlling the adjustable appendage to maneuver the adjustable appendage into the alternate pose before and/or during the adjustment of the adjustable vision component into the particular pose. In some implementations, the method can further include an operation of selecting the alternate pose, from a plurality of candidate alternate poses, based at least in part on a determined distance between the alternate pose and a current pose of the adjustable appendage. For example, the distance can be a distance in joint space or a distance in Cartesian space. In some implementations, the method can further include an operation of selecting the alternate pose based at least in part on determining that the adjustable appendage, at the alternate pose, will not block the second field of view of the adjustable vision component when the adjustable vision component is adjusted to the particular pose. In some implementations, the fixed vision component is a rotating light detection and ranging (LIDAR) component.

In some implementations, the adjustable vision component is an active stereographic camera or a passive stereographic camera. In some implementations, adjusting the adjustable vision component through the various poses of the adjustable vision component comprises: determining, during the navigating, that the robot will navigate toward an area that is in a blind spot of the fixed vision component; determining a given pose, of the various poses of the adjustable vision component, based on the given pose directing the first field of view of the adjustable vision component toward the area; and adjusting the adjustable vision component to the given pose in advance of the robot navigating toward the area. In some implementations, adjusting the adjustable vision component through the various poses of the adjustable vision component comprises: detecting, during the navigating and based on at least one of the instances of first vision data, a dynamic object in the environment; determining a given pose, of the various poses of the adjustable vision component, based on the given pose directing the first field of view of the adjustable vision component toward a current location of the dynamic object; and adjusting the adjustable vision component to the given pose.

In some implementations, adjusting the adjustable vision component through the various poses of the adjustable vision component comprises: determining a particular area of the environment during the navigating, wherein determining the particular area is based at least in part on a duration of time since the particular area has been captured in at least one of the instances of the second vision data; determining a given pose, of the various poses of the adjustable vision component, based on the given pose directing the first field of view of the adjustable vision component toward the particular area; and adjusting the adjustable vision component to the given pose.

In other implementations, a robot is set forth as including: a frame; a fixed vision component that captures instances of first vision data and has a fixed pose relative to the frame; an adjustable vision component that maneuvers through various poses relative to the frame while the fixed vision component is capturing the instances of first vision data, wherein the fixed vision component has a first field of view that is more constrained than a second field of view of the adjustable vision component, and wherein the adjustable vision component captures instances of second vision data. In some implementations, the robot can further include one or more motors that control a trajectory of the frame based on the instances of the first vision data and the instances of the second vision data.

In some implementations, the robot can include one or more processors, and an adjustable arm. The one or more processors can cause the adjustable vision component to maneuver through the various poses by performing operations that include: determining a particular pose, of the various poses, to which to conform the adjustable vision component, determining whether the adjustable arm will, if unaltered, be within the second field of view of the fixed vision component when the adjustable vision component is maneuvered into the particular pose, and, when it is determined that the adjustable arm will be within the second field of view when the adjustable vision component is maneuvered into the particular pose: controlling the adjustable arm to maneuver the adjustable arm into an alternate pose before and/or during adjustment of the adjustable vision component into the particular pose.

In some implementations, the operations performed by the robot can include, when it is determined that the adjustable arm will not be within the second field of view when the adjustable vision component is maneuvered into the particular pose: bypassing controlling the adjustable arm to maneuver the adjustable arm into the alternate pose before and/or during adjustment of the adjustable vision component into the particular pose. In some implementations, the fixed vision component is a rotating light detection and ranging (LIDAR) component and the adjustable vision component is an active stereographic camera.

In yet other implementations according to the claims, a method implemented by one or more processors is set forth as including operations such as determining, while a robot is traversing through an area, whether one or more spaces within the area are predicted to affect a route of the robot while the robot is traversing the area, wherein the robot includes a first vision component and a second vision component for observing the one or more spaces, and the first vision component is different than the second vision component. In some implementations, the method can further include an operation of, when the area is determined to include one more spaces that are predicted to affect the route of the robot: determining, for each space of the one or more spaces, a predicted amount of robot resources consumed by redirecting the second vision component in a direction of a respective space of the one or more spaces while the robot is traversing through the area, selecting, based on determining the predicted amount of robot resources consumed for each space, a particular space of the one or more spaces. In some implementations, a particular amount of robot resources predicted for the particular space indicates that less robot resources will be consumed by the robot when redirecting the second vision component toward the particular space relative to redirecting the second vision component toward one or more other spaces of the one or more spaces. In some implementations, the method can further include an operation of causing, based on selecting the particular space, the second vision component to be redirected towards the particular space in furtherance of capturing, by the second vision component, vision data corresponding to the particular space, and controlling the robot based on the vision data of the particular space, while the robot is traversing through the area.

In some implementations, determining whether the one or more spaces within the area are predicted to affect the route of the robot while the robot is traversing the area includes: determining whether the one or more spaces are located outside of a field of view of the first vision component. In some implementations, determining whether the one or more spaces within the area are predicted to affect the route of the robot while the robot is traversing the area includes: determining whether the one or more spaces are located along a predicted trajectory of the robot. In some implementations, controlling the robot based on the vision data includes causing the robot to maneuver towards the particular space based on point cloud data that categorizes the particular space as unoccupied space.

In some implementations, controlling the robot based on the vision data includes causing the robot to maneuver away from the particular space based on point cloud data that categorizes the particular space as occupied space. In some implementations, the method can further include an operation of, when the one or more spaces are predicted to not affect the route of the robot: causing, while the robot is traversing through the area, the second vision component to be directed toward the area indiscriminately with respect to a location of the one or more spaces. In some implementations, the first vision component is a rotating light detection and ranging (LIDAR) component and the second vision component is an active stereographic camera. In some implementations, the robot includes an adjustable arm and the method further comprises: determining whether the adjustable arm will, if unaltered, be within a field of view of the second vision component when the second vision component is redirected towards the particular space. In some implementations, the method can further include an operation of, when the adjustable arm is determined be within the field of view of the second vision component when the first vision component is redirected towards the particular space: controlling the adjustable arm to maneuver the adjustable arm into an alternate pose before and/or during maneuvering of the second vision component toward the particular space. In some implementations, the method can further include an operation of, when the adjustable arm is determined be outside of the field of view of the second vision component when the second vision component is redirected towards the particular space: bypassing controlling the adjustable arm to maneuver the adjustable arm into the alternate pose before and/or during maneuvering of the second vision component toward the particular space.

In yet other implementations, a method implemented by one or more processors is set forth as including operations such as determining, while a robot is traversing through an area, whether an obstacle metric that characterizes the area satisfies an obstacle threshold, wherein the obstacle metric is based on point cloud data that characterizes one or more spaces within the area, and wherein the robot includes a first vision component and a second vision component for observing the one or more spaces. In some implementations, the method can further include an operation of, when the obstacle metric satisfies the obstacle threshold: determining, for each space of the one or more spaces characterized by the point cloud data, an operational metric, wherein the operational metric is based on a predicted amount of robot resources that will be consumed by redirecting the second vision component in a direction of a respective space while the robot is traversing through the area. In some implementations, the method can further include an operation of selecting, based on determining each operational metric, a particular space that corresponds to a particular operational metric, wherein the particular operational metric indicates that less robot resources will be consumed by the robot when redirecting the second vision component toward the particular space relative to redirecting the first vision component toward one or more other spaces within the area. In some implementations, the method can further include an operation of causing, based on selecting the particular space, the second vision component to be redirected towards the particular space in furtherance of capturing, by the second vision component, vision data corresponding to the particular space, and controlling the robot based on the vision data of the particular space, while the robot is traversing through the area.

In some implementations, the point cloud data categorizes each space of the one or more spaces within the area as either an occupied space or an unoccupied space. In some implementations, the method can further include an operation of when the obstacle metric satisfies the obstacle threshold: processing the vision data of the one or more spaces to determine whether to categorize an uncategorized space of the one or more spaces as an occupied space or an unoccupied space, and generating additional point cloud data that categorizes the uncategorized space as either an occupied space or an unoccupied space. In some implementations, controlling the robot based on the vision data includes causing the robot to maneuver towards or away from the particular space. In some implementations, the method can further include an operation of, when the obstacle metric is determined to not satisfy the obstacle threshold: causing, while the robot is traversing through the area, the second vision component to be directed toward the area indiscriminately with respect to a location of the one or more spaces. In some implementations, the second vision component has a field of view that is limited relative to another field of view of the first vision component. In some implementations, the robot includes an adjustable arm and the method further comprises: determining whether the adjustable arm will, if unaltered, be within the field of view of the second vision component when the second vision component is redirected towards the particular space, and when it is determined that the adjustable arm will be within the field of view of the second vision component when the second vision component is redirected towards the particular space: controlling the adjustable arm to maneuver into an alternate pose before and/or during the redirecting of the second vision component toward the particular space.

## Claims

1. A method implemented by one or more processors, the method comprising:
determining, while a robot (102) is traversing through an area (104), whether one or more spaces within the area are predicted to affect a route of the robot while the robot is traversing the area,
wherein the robot includes a first vision component (112) and a second vision component (122) for observing the one or more spaces, and the first vision component is different than the second vision component; and
when the area is determined to include one more spaces that are predicted to affect the route of the robot:
determining, for each space of the one or more spaces, a predicted amount of robot resources consumed by redirecting the second vision component in a direction of a respective space of the one or more spaces while the robot is traversing through the area,
selecting, based on determining the predicted amount of robot resources consumed for each space, a particular space of the one or more spaces,
wherein a particular amount of robot resources predicted for the particular space indicates that less robot resources will be consumed by the robot when redirecting the second vision component toward the particular space relative to redirecting the second vision component toward one or more other spaces of the one or more spaces,
causing, based on selecting the particular space, the second vision component to be redirected towards the particular space in furtherance of capturing, by the second vision component, vision data corresponding to the particular space,
controlling the robot based on the vision data of the particular space, while the robot is traversing through the area; and
wherein determining whether the one or more spaces within the area (104) are predicted to affect the route of the robot (102) while the robot is traversing the area includes:
determining whether the one or more spaces are located outside of a field of view (210) of the first vision component (112).

2. The method of claim 1, wherein determining whether the one or more spaces within the area (104) are predicted to affect the route of the robot (102) while the robot is traversing the area includes:
determining whether the one or more spaces are located along a predicted trajectory (206) of the robot.

3. The method of any of claims 1 or 2, wherein controlling the robot (102) based on the vision data includes causing the robot to maneuver towards the particular space based on point cloud data that categorizes the particular space as unoccupied space.

4. The method of any of claims 1 or 2, wherein controlling the robot (102) based on the vision data includes causing the robot to maneuver away from the particular space based on point cloud data that categorizes the particular space as occupied space.

5. The method of any of claims 1 to 4, further comprising:
when the one or more spaces are predicted to not affect the route of the robot (102): causing, while the robot is traversing through the area, the second vision component (122) to be directed toward the area indiscriminately with respect to a location of the one or more spaces.

6. The method of any of claims 1 to 5, wherein determining the predicted amount of robot resources consumed for a given space, of the one or more spaces, comprises:
determining that a pose of a robot arm (118, 120), of the robot (102), would obstruct a view of the given space by the second vision component (122), and
based on determining that the pose would obstruct the view, determining a cost associated with maneuvering the robot arm from a current pose.

7. The method claim 6, further comprising based on determining that the pose would obstruct the view, maneuvering the robot arm (118, 120) into a pose that does not obstruct the view of the given space by the second vision component (122).

8. The method of any of claims 1 to 7, wherein the first vision component (112) comprises an adjustable vision component comprising an active stereographic camera or a passive stereographic camera.

9. The method of any of claims 1 to 8, wherein the second vision component (122) is a fixed vision component.

10. The method of any of claims 1 to 9, wherein the second vision component (122) comprises a rotating light detection and ranging, LIDAR, component.

11. The method of any of claims 1 to 10, wherein the predicted amount of robot resources relates to at least one of the following: processing bandwidth, energy storage and network bandwidth.

12. A robot (102), comprising:
a frame;
a first vision component (112) for observing one or more spaces within an area (104);
a second vision component (122) for observing the one or more spaces within the area, wherein the first vision component is different than the second vision component; and
one or more processors, the one or more processors comprising means for:
determining, while the robot is traversing through the area, whether the one or more spaces within the area are predicted to affect a route of the robot while the robot is traversing the area,
when the area is determined to include one more spaces that are predicted to affect the route of the robot:
determining, for each space of the one or more spaces, a predicted amount of robot resources consumed by redirecting the second vision component in a direction of a respective space of the one or more spaces while the robot is traversing through the area,
selecting, based on determining the predicted amount of robot resources consumed for each space, a particular space of the one or more spaces,
wherein a particular amount of robot resources predicted for the particular space indicates that less robot resources will be consumed by the robot when redirecting the second vision component toward the particular space relative to redirecting the second vision component toward one or more other spaces of the one or more spaces,
causing, based on selecting the particular space, the second vision component to be redirected towards the particular space in furtherance of capturing, by the second vision component, vision data corresponding to the particular space,
controlling the robot based on the vision data of the particular space, while the robot is traversing through the area; and
wherein determining whether the one or more spaces within the area (104) are predicted to affect the route of the robot while the robot is traversing the area includes:
determining whether the one or more spaces are located outside of a field of view (210) of the first vision component (112).

13. The robot (102) of claim 12, wherein determining whether the one or more spaces within the area (104) are predicted to affect the route of the robot while the robot is traversing the area includes:
determining whether the one or more spaces are located along a predicted trajectory (206) of the robot.

## Patentansprüche

1. Verfahren, das durch einen oder mehrere Prozessoren implementiert wird, wobei das Verfahren Folgendes umfasst:
Bestimmen, während ein Roboter (102) einen Bereich (104) durchquert, ob ein oder mehrere Räume innerhalb des Bereichs voraussichtlich eine Route des Roboters beeinflussen, während der Roboter den Bereich durchquert,
wobei der Roboter eine erste Sichtkomponente (112) und eine zweite Sichtkomponente (122) zum Beobachten des einen oder der mehreren Räume beinhaltet und sich die erste Sichtkomponente von der zweiten Sichtkomponente unterscheidet; und
wenn bestimmt wird, dass der Bereich einen oder mehrere Räume beinhaltet, die voraussichtlich die Route des Roboters beeinflussen:
Bestimmen einer vorhergesagten Menge an Roboterressourcen für jeden Raum des einen oder der mehreren Räume, die durch Umleiten der zweiten Sichtkomponente in einer Richtung eines jeweiligen Raums des einen oder der mehreren Räume verbraucht werden, während der Roboter den Bereich durchquert,
Auswählen eines bestimmten Raums des einen oder der mehreren Räume basierend auf dem Bestimmen der vorhergesagten Menge an Roboterressourcen, die für jeden Raum verbraucht werden,
wobei eine bestimmte Menge an Roboterressourcen, die für den bestimmten Raum vorhergesagt wird, angibt, dass beim Umleiten der zweiten Sichtkomponente in Richtung des bestimmten Raums relativ zum Umleiten der zweiten Sichtkomponente in Richtung eines oder mehrerer anderer Räume des einen oder der mehreren Räume weniger Roboterressourcen durch den Roboter verbraucht werden,
Bewirken basierend auf dem Auswählen des bestimmten Raums, dass die zweite Sichtkomponente in Richtung des bestimmten Raums zur Förderung des Erfassens von Sichtdaten entsprechend dem bestimmten Raum durch die zweite Sichtkomponente umzuleiten ist,
Steuern des Roboters basierend auf den Sichtdaten des bestimmten Raums, während der Roboter den Bereich durchquert; und
wobei Bestimmen, ob der eine oder die mehreren Räume innerhalb des Bereichs (104) voraussichtlich die Route des Roboters (102) beeinflussen, während der Roboter den Bereich durchquert, Folgendes beinhaltet:
Bestimmen, ob sich der eine oder die mehreren Räume außerhalb eines Sichtfelds (210) der ersten Sichtkomponente (112) befinden.

2. Verfahren nach Anspruch 1, wobei Bestimmen, ob der eine oder die mehreren Räume innerhalb des Bereichs (104) voraussichtlich die Route des Roboters (102) beeinflussen, während der Roboter den Bereich durchquert, Folgendes beinhaltet:
Bestimmen, ob sich der eine oder die mehreren Räume entlang einer vorhergesagten Bahn (206) des Roboters befinden.

3. Verfahren nach einem der Ansprüche 1 oder 2, wobei Steuern des Roboters (102) basierend auf den Sichtdaten Bewirken des Manövrierens des Roboters in Richtung des bestimmten Raums basierend auf Punktwolkendaten beinhaltet, die den bestimmten Raum als unbesetzten Raum kategorisieren.

4. Verfahren nach einem der Ansprüche 1 oder 2, wobei Steuern des Roboters (102) basierend auf den Sichtdaten Bewirken des Manövrierens des Roboters von dem bestimmten Raum weg basierend auf Punktwolkendaten beinhaltet, die den bestimmten Raum als besetzten Raum kategorisieren.

5. Verfahren nach einem der Ansprüche 1 bis 4, ferner umfassend:
wenn vorhergesagt wird, dass der eine oder die mehreren Räume die Route des Roboters (102) nicht beeinflussen: Bewirken, während der Roboter den Bereich durchquert, dass die zweite Sichtkomponente (122) willkürlich in Richtung des Bereichs in Bezug auf eine Position des einen oder der mehreren Räume gerichtet wird.

6. Verfahren nach einem der Ansprüche 1 bis 5, wobei Bestimmen der vorhergesagten Menge an Roboterressourcen, die für einen gegebenen Raum des einen oder der mehreren Räume verbraucht werden, Folgendes umfasst:
Bestimmen, dass eine Pose eines Roboterarms (118, 120) des Roboters (102) eine Ansicht des gegebenen Raums durch die zweite Sichtkomponente (122) behindern würde, und
basierend auf dem Bestimmen, dass die Pose die Ansicht behindern würde, Bestimmen der Kosten, die mit dem Manövrieren des Roboterarms aus einer aktuellen Pose verknüpft sind.

7. Verfahren nach Anspruch 6, ferner umfassend basierend auf dem Bestimmen, dass die Pose die Ansicht behindern würde, Manövrieren des Roboterarms (118, 120) in eine Pose, die die Ansicht des gegebenen Raums durch die zweite Sichtkomponente (122) nicht behindert.

8. Verfahren nach einem der Ansprüche 1 bis 7, wobei die erste Sichtkomponente (112) eine einstellbare Sichtkomponente, umfassend eine aktive stereografische Kamera oder eine passive stereografische Kamera, umfasst.

9. Verfahren nach einem der Ansprüche 1 bis 8, wobei die zweite Sichtkomponente (122) eine feste Sichtkomponente ist.

10. Verfahren nach einem der Ansprüche 1 bis 9, wobei die zweite Sichtkomponente (122) eine drehende Lichterkennungs- und -entfernungskomponente, LIDAR-Komponente, umfasst.

11. Verfahren nach einem der Ansprüche 1 bis 10, wobei die vorhergesagte Menge an Roboterressourcen mindestens eine der folgenden Größen betrifft: Verarbeitungsbandbreite, Energiespeicher und Netzwerkbandbreite.

12. Roboter (102), umfassend:
einen Rahmen;
eine erste Sichtkomponente (112) zum Beobachten eines oder mehrerer Räume innerhalb eines Bereichs (104);
eine zweite Sichtkomponente (122) zum Beobachten des einen oder der mehreren Räume innerhalb des Bereichs, wobei sich die erste Sichtkomponente von der zweiten Sichtkomponente unterscheidet; und
einen oder mehrere Prozessoren, wobei der eine oder die mehreren Prozessoren Mittel für Folgendes umfassen:
Bestimmen, während der Roboter den Bereich durchquert, ob der eine oder die mehreren Räume innerhalb des Bereichs voraussichtlich eine Route des Roboters beeinflussen, während der Roboter den Bereich durchquert,
wenn bestimmt wird, dass der Bereich einen oder mehrere Räume beinhaltet, die voraussichtlich die Route des Roboters beeinflussen:
Bestimmen einer vorhergesagten Menge an Roboterressourcen für jeden Raum des einen oder der mehreren Räume, die durch Umleiten der zweiten Sichtkomponente in eine Richtung eines jeweiligen Raums des einen oder der mehreren Räume verbraucht werden, während der Roboter den Bereich durchquert,
Auswählen eines bestimmten Raums des einen oder der mehreren Räume basierend auf dem Bestimmen der vorhergesagten Menge an Roboterressourcen, die für jeden Raum verbraucht werden,
wobei eine bestimmte Menge an Roboterressourcen, die für den bestimmten Raum vorhergesagt wird, angibt, dass beim Umleiten der zweiten Sichtkomponente in Richtung des bestimmten Raums relativ zum Umleiten der zweiten Sichtkomponente in Richtung eines oder mehrerer anderer Räume des einen oder der mehreren Räume weniger Roboterressourcen durch den Roboter verbraucht werden,
Bewirken basierend auf dem Auswählen des bestimmten Raums, dass die zweite Sichtkomponente in Richtung des bestimmten Raums zur Förderung des Erfassens von Sichtdaten entsprechend dem bestimmten Raum durch die zweite Sichtkomponente umgeleitet wird,
Steuern des Roboters basierend auf den Sichtdaten des bestimmten Raums, während der Roboter den Bereich durchquert; und
wobei Bestimmen, ob der eine oder die mehreren Räume innerhalb des Bereichs (104) voraussichtlich die Route des Roboters beeinflussen, während der Roboter den Bereich durchquert, Folgendes beinhaltet:
Bestimmen, ob sich der eine oder die mehreren Räume außerhalb eines Sichtfelds (210) der ersten Sichtkomponente (112) befinden.

13. Roboter (102) nach Anspruch 12, wobei Bestimmen, ob der eine oder die mehreren Räume innerhalb des Bereichs (104) voraussichtlich die Route des Roboters beeinflussen, während der Roboter den Bereich durchquert, Folgendes beinhaltet:
Bestimmen, ob sich der eine oder die mehreren Räume entlang einer vorhergesagten Bahn (206) des Roboters befinden.

## Revendications

1. Procédé mis en œuvre par un ou plusieurs processeurs, le procédé comprenant :
le fait de déterminer, pendant qu'un robot (102) traverse une zone (104), si un ou plusieurs espaces à l'intérieur de la zone sont susceptibles d'affecter un itinéraire du robot pendant que le robot traverse la zone,
dans lequel le robot comporte un premier composant de vision (112) et un second composant de vision (122) pour observer les un ou plusieurs espaces, et le premier composant de vision est différent du second composant de vision ; et
lorsque la zone est déterminée comme comportant un ou plusieurs espaces qui sont susceptibles d'affecter l'itinéraire du robot :
la détermination, pour chaque espace des un ou plusieurs espaces, d'une quantité prédite de ressources robotiques consommées en redirigeant le second composant de vision dans une direction d'un espace respectif des un ou plusieurs espaces pendant que le robot traverse la zone,
la sélection, sur la base de la détermination de la quantité prédite de ressources robotiques consommées pour chaque espace, d'un espace particulier des un ou plusieurs espaces,
dans lequel une quantité particulière de ressources robotiques prédite pour l'espace particulier indique que moins de ressources robotiques seront consommées par le robot lors de la redirection du second composant de vision vers l'espace particulier par rapport à la redirection du second composant de vision vers un ou plusieurs autres espaces des un ou plusieurs espaces,
le fait d'entraîner, sur la base de la sélection de l'espace particulier, la redirection du second composant de vision vers l'espace particulier afin de permettre la capture, par le second composant de vision, de données de vision correspondant à l'espace particulier,
la commande du robot sur la base des données de vision de l'espace particulier, pendant que le robot traverse la zone ; et
dans lequel le fait de déterminer si les un ou plusieurs espaces à l'intérieur de la zone (104) sont susceptibles d'affecter l'itinéraire du robot (102) pendant que le robot traverse la zone comporte :
le fait de déterminer si les un ou plusieurs espaces sont situés en dehors d'un champ de vision (210) du premier composant de vision (112).

2. Procédé selon la revendication 1, dans lequel le fait de déterminer si les un ou plusieurs espaces à l'intérieur de la zone (104) sont susceptibles d'affecter l'itinéraire du robot (102) pendant que le robot traverse la zone comporte :
le fait de déterminer si les un ou plusieurs espaces sont situés le long d'une trajectoire prédite (206) du robot.

3. Procédé selon l'une quelconque des revendications 1 ou 2, dans lequel la commande du robot (102) sur la base des données de vision comporte le fait d'entraîner le robot à manœuvrer vers l'espace particulier sur la base de données de nuage de points qui catégorisent l'espace particulier comme espace inoccupé.

4. Procédé selon l'une quelconque des revendications 1 ou 2, dans lequel la commande du robot (102) sur la base des données de vision comporte le fait d'entraîner le robot à manœuvrer à l'écart de l'espace particulier sur la base de données de nuage de points qui catégorisent l'espace particulier comme espace occupé.

5. Procédé selon l'une quelconque des revendications 1 à 4, comprenant en outre :
lorsque les un ou plusieurs espaces ne sont pas susceptibles d'affecter l'itinéraire du robot (102) : le fait d'entraîner, pendant que le robot traverse la zone, la direction du second composant de vision (122) vers la zone sans distinction par rapport à un emplacement des un ou plusieurs espaces.

6. Procédé selon l'une quelconque des revendications 1 à 5, dans lequel la détermination de la quantité prédite de ressources robotiques consommées pour un espace donné, des un ou plusieurs espaces, comprend :
la détermination qu'une pose d'un bras de robot (118, 120), du robot (102), obstruerait une vue de l'espace donné par le second composant de vision (122), et
sur la base de la détermination que la pose obstruerait la vue, la détermination d'un coût associé à la manœuvre du bras de robot à partir d'une pose actuelle.

7. Procédé selon la revendication 6, comprenant en outre, sur la base de la détermination que la pose obstruerait la vue, la manœuvre du bras de robot (118, 120) dans une pose qui n'obstrue pas la vue de l'espace donné par le second composant de vision (122).

8. Procédé selon l'une quelconque des revendications 1 à 7, dans lequel le premier composant de vision (112) comprend un composant de vision réglable comprenant une caméra stéréographique active ou une caméra stéréographique passive.

9. Procédé selon l'une quelconque des revendications 1 à 8, dans lequel le second composant de vision (122) est un composant de vision fixe.

10. Procédé selon l'une quelconque des revendications 1 à 9, dans lequel le second composant de vision (122) comprend un composant rotatif de détection et de télémétrie par la lumière, LIDAR.

11. Procédé selon l'une quelconque des revendications 1 à 10, dans lequel la quantité prédite de ressources robotiques se rapporte à au moins l'un des éléments suivants : bande passante de traitement, stockage d'énergie et bande passante de réseau.

12. Robot (102), comprenant :
un cadre ;
un premier composant de vision (112) pour observer un ou plusieurs espaces à l'intérieur d'une zone (104) ;
un second composant de vision (122) pour observer les un ou plusieurs espaces à l'intérieur de la zone, dans lequel le premier composant de vision est différent du second composant de vision ; et
un ou plusieurs processeurs, les un ou plusieurs processeurs comprenant des moyens pour :
déterminer, pendant que le robot traverse la zone, si les un ou plusieurs espaces à l'intérieur de la zone sont susceptibles d'affecter un itinéraire du robot pendant que le robot traverse la zone,
lorsque la zone est déterminée comme comportant un ou plusieurs espaces qui sont susceptibles d'affecter l'itinéraire du robot :
la détermination, pour chaque espace des un ou plusieurs espaces, d'une quantité prédite de ressources robotiques consommées en redirigeant le second composant de vision dans une direction d'un espace respectif des un ou plusieurs espaces pendant que le robot traverse la zone,
la sélection, sur la base de la détermination de la quantité prédite de ressources robotiques consommées pour chaque espace, d'un espace particulier des un ou plusieurs espaces,
dans lequel une quantité particulière de ressources robotiques prédite pour l'espace particulier indique que moins de ressources robotiques seront consommées par le robot lors de la redirection du second composant de vision vers l'espace particulier par rapport à la redirection du second composant de vision vers un ou plusieurs autres espaces des un ou plusieurs espaces,
le fait d'entraîner, sur la base de la sélection de l'espace particulier, la redirection du second composant de vision vers l'espace particulier afin de permettre la capture, par le second composant de vision, de données de vision correspondant à l'espace particulier,
la commande du robot sur la base des données de vision de l'espace particulier, pendant que le robot traverse la zone ; et
dans lequel le fait de déterminer si les un ou plusieurs espaces à l'intérieur de la zone (104) sont susceptibles d'affecter l'itinéraire du robot pendant que le robot traverse la zone comporte :
le fait de déterminer si les un ou plusieurs espaces sont situés en dehors d'un champ de vision (210) du premier composant de vision (112).

13. Robot (102) selon la revendication 12, dans lequel le fait de déterminer si les un ou plusieurs espaces à l'intérieur de la zone (104) sont susceptibles d'affecter l'itinéraire du robot pendant que le robot traverse la zone comporte :
le fait de déterminer si les un ou plusieurs espaces sont situés le long d'une trajectoire prédite (206) du robot.
